(19) Europäisches Patentamt
European Patent Office
Office européen des brevets

(11) Publication number: 0 276 056
A2

(12) **EUROPEAN PATENT APPLICATION**

(21) Application number: 88300104.2

(22) Date of filing: 07.01.88

(51) Int. Cl.4: **G 05 D 16/20**

(30) Priority: 23.01.87 US 6208

(43) Date of publication of application:
27.07.88 Bulletin 88/30

(84) Designated Contracting States:
DE FR GB IT NL SE

(71) Applicant: Borg-Warner Automotive, Inc.
3001, West Big Beaver Road
Troy Michigan 48048 (US)

(72) Inventor: Miller, Alan Leonard
2230 N. Orchard Street
Chicago Illinois 60614 (US)

Petzold, Werner Paul
6853 W. Leland Avenue
Harwood Heights Illinois 60656 (US)

(74) Representative: Williams, Trevor John et al
J.A. KEMP & CO. 14 South Square Gray's Inn
London WC1R 5EU (GB)

(54) Valve arrangement for a fluid flow control system.

(57) A two stage valve assembly (14) for a fluid control system (10) wherein one stage (48) includes a pressure responsive spring centered spool (50) for regulating fluid flow between a fluid source (16) and a fluid responsive actuator (12) as a function of the spools linear position. The linear position of the spool is determined by oppositely directed pressure based position determining forces one of which may predominate over the other. The other stage (42) of the valve assembly includes an on-off solenoid valve (88) for controlling one of the positioning determining forces. A pulse width modulated circuit (28) has its output coupled to the valve winding (24). The PWM circuit is capable of providing an alternating output signal the duty cycle of which may be varied to effect the position of the spool and thereby the flow to the actuator.

FIG. 1.

**Description**

## VALVE ARRANGEMENT FOR A FLUID FLOW CONTROL SYSTEM

Various valve arrangements have been used to control fluid flow to a fluid responsive actuator, such as a clutch or brake mechanism in a vehicle transmission. One known approach includes the use of a two stage valve assembly including a servo valve wherein an electrical input signal causes a displacement of a valve component in a precise manner. A two stage valve assembly using an on-off solenoid valve in one stage and a freely mounted spool in its second stage was disclosed in U.S. patent 4,116,321, granted September 26, 1978. Rather than controlling flow, this patented apparatus was concerned with pressure regulation. With the patented apparatus, the valve output flow was not proportional to the control signal but to the integral of the control signal. Accordingly, it could not be operated open loop. Instead, the patented apparatus must be used in a closed loop system. Since the valve disclosed in the '321 patent is functionally equivalent to an integrator it always has a 90° phase lag. When used in an application when the system to be controlled has a substantial amount of time lag, it may be difficult to stabilize the control with a single feed back loop.

In view of the above and with accordance with the present invention, there is provided a control system for regulating fluid flow to a fluid responsive actuator. The system includes a two stage valve assembly wherein one stage includes a pressure responsive spool with resilient feedback means for regulating fluid flow between a fluid source or supply and the fluid responsive actuator as a function of the spool's linear position. The linear position of the spool being determined by oppositely directed pressure based position determining forces one of which may predominate over the other. The other stage of the valve assembly includes an on-off solenoid valve for controlling one position determining force. The use of an on-off solenoid valve enables the valve assembly to produce a linear proportional fluid flow output. A pulse width modulated (PWM) circuit has its output coupled to the solenoid valve winding. The PWM circuit is capable of providing an alternating output signal of which the duty cycle may be varied to effect the position of the spool and thereby the flow to the actuator. Functionally, the valve assembly of the present invention is a time lag element instead of an integrator. As such, the valve assembly offers to the control system less phase lag than an integrator at lower frequency. The time lag or bandwidth depends on the valve design which can be modified to suit particular applications.

In view of the above, a primary object of this invention is the provision of an improved control system for regulating fluid flow between a fluid supply source and a fluidically responsive actuator such as that used in vehicle transmission systems.

Another object of this invention is the provision of a control system which provides the advantages of a servo type valve but at considerably less cost.

Still another object of this invention is the provision of a control system having a two stage valve assembly which uses an on-off solenoid to produce linear proportional output from the valve assembly which is obtainable only so far with servo valves.

Having in mind the above objects and other attendant advantages that would be evident from an understanding from this disclosure, the invention comprises the devices, combination and arrangement of parts as illustrated in the presently preferred form of the invention which are hereinafter set forth in detail to enable those skilled in the art to readily understand the function, operation, construction and advantages of same when read in conjunction with the accompanying drawing in which:

Figure 1 is a block diagram of a control system constructed in accordance with the inventive teaching;

Figure 2 is a schematic illustration of a valve arrangement useful with the present invention;

Figure 3 is a simplified illustration of one stage of the two stage valve depicted in Figure 2;

Figure 4 is an end view, providing structural details of the valve assembly shown in Figure 2 and 3;

Figure 5 is a sectional view, taken along line 5-5 of Figure 4, depicting additional structural details of one embodiment of the valve assembly useful with the present invention;

Figure 6, 7 and 8 are graphical representations, useful in understanding the operation of the valve assembly shown in Figures 2 through 5;

Figure 9 is a sectional view similar to Figure 5 but showing a second embodiment of valve assembly useful with the present invention; and

Figure 10 is a simplified illustration of the pilot stage of the two stage valve assembly depicted in Figure 9.

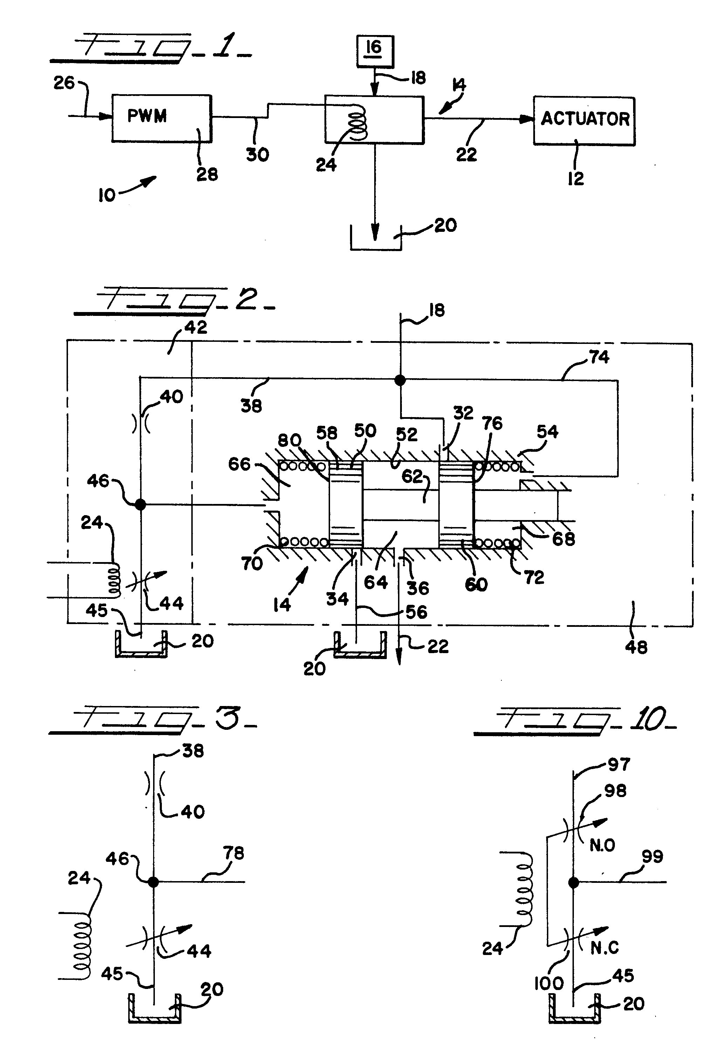

Figure 1 schematically illustrates a control system 10 for regulating the operation of a hydraulic device 12. The device 12 can be a movable sheave in a CVT transmission, or any unit which responds as a function of the amount of fluid flow thereto. A salient feature or component of the control system is the provision of a control valve assembly 14 for modulating fluid flow between a fluid source 16 and the hydraulic actuator 12. The fluid source may be in the form of a pump or other fluid supply unit. The valve assembly is adapted to receive fluid under pressure from the fluid source 16 over line 18. In the illustrated embodiment, the valve assembly has a plurality of outlets. One or more of these outlets drain fluid to a sump or reservoir 20. Another outlet is connected over line 22 to the actuator 12. As will be described in detail below, the valve assembly 14 also includes a winding 24 which is effective to vary effective fluid flow through an orifice.

Unlike other known valve arrangements having feedback or closed loop control systems, the control system 10 of the present invention is open loop. In the preferred embodiment, a preselected control signal is applied over line 26 to a Pulse Width Modulation (PWM) stage 28 of the control system. This can be a free running multivibrator or voltage controlled oscillator of the type in which the period is constant but the duty cycle is regulated by a potentiometer or other modulatable controller (not shown). Such stages as PWM stage 28 are well known and understood in this art. The output square - wave signal with a controlled or predetermined duty cycle is applied over line 30 to winding 24 of valve 14. With this perspective of where the valve assembly is incorporated in the control system, the construction and operation of the valve assembly will now be described.

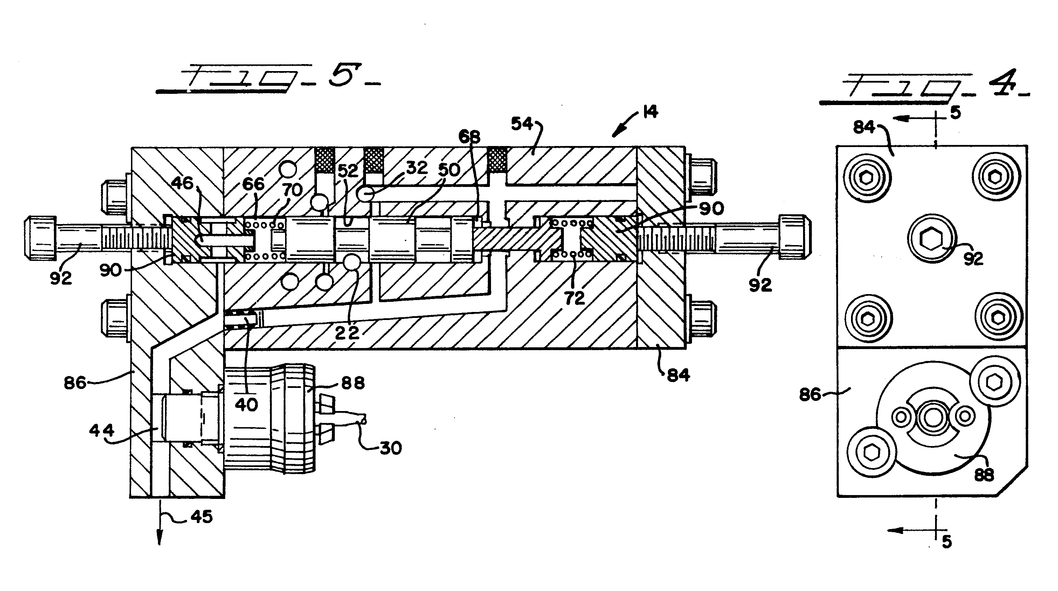

Figure 2 is a schematic representation of the two stage valve assembly 14. As illustrated, a fluid under pressure is received at intake port 32 of the valve assembly over line 18 and fluid may be discharged from the valve assembly to the sump through output ports 34 and 36. The supply line pressure is passed through lines 18 and 38, through a first orifice 40 in a pilot or first stage 42 of the valve assembly, and thence through a second orifice 44. The fluid passing through the orifice 44 is drained to the sump 20 over line 45. The flow rate through orifice 44 is regulated by the signal received on winding 24. Orifices 40 and 44 are coupled together at a common point or junction 46 and this point represents a constant pressure point in the valve assembly 14.

Stage 48 of the valve assembly is a flow control stage because it controls the flow over line 22 to the actuator 12 as a function of spool postion, to operate a unit such as a movable sheave in a CVT transmission. Stage 48 of the valve assembly 14 includes a closed center spool or closure member 50 which is slidably arranged or accomodated in an elongated slideway 52 provided in a body portion 54 of the valve assembly. The spool or valve means regulates the fluid flow between intake port 32 and, in the illustrated embodiment, either of two axially spaced output orifices 34 and 36. As such, stage 48 is a three-way arrangement although additional ports could easily be added without distracting from the spirit and scope of the invention. The return orifice 34 leads or is connected to line 56 which delivers fluid to sump 20 while output orifice 36 leads or is connected to line 22 leading to the actuator 12.

The valve spool is shown as having lands 58 and 60 which are connected by a stem 62 of comparatively smaller diameter. Thus, an annular space 64 surrounds the stem so as to permit communication of orifice 36 with either the input port 32 or the return port 34 depending on the relative position of lands 58 and 60. The opposing end faces of lands 58 and 60 preferably have square outer annular corners and substantially flat sides. The end faces of the lands 58 and 60 have the same axial spacing as that between return port 34 and outlet port 36.

A hydraulic pressure system is included within the valve assembly for controlling the position of the valve means 50 and thereby the flow at the control fluid port 36. This hydraulic system includes fluidic means which communicate with the fluid supply source and act to apply oppositely directed position determining forces against the opposite ends of the spool or valve means 50. Such fluidic means includes end chambers 66 and 68 which, in the illustrated embodiment are lateral extensions of the slideway 52 arranged in the valve body 54. Stage 48 of valve assembly 14 further includes mechanical resilient means 70 and 72 defining resilient feedback means for the valve assembly. The mechanical resilient means 70 and 72 comprise compression springs disposed in each end chamber, with the ends of each spring impinging against an end wall of the end chamber and a spool end. Each end chamber is adapted to receive input fluid under pressure. That is, fluid under supply pressure is passed over line 74 to end chamber 68 wherein it establishes a fluid pressure against end surface 76 of spool 50. The fluid at common point 42 is passed over line 78 to the other end chamber 66 wherein it establishes a fluid pressure against end surface 80 of spool 50. It should be noted, that in the embodiment illustrated in Figs. 2, 3 and 5, the operable surface area of spool end 80 is approximately 1/3 larger than the area of the opposite spool end. The differential pressure established between the end chambers 66 and 68 along with the influence of the mechanical feedback means positions the spool 50 in the slideway 52.

As may be appreciated, the position of spool 50 in the passageway controls flow rather than pressure. In operation, the valve means or spool 50 is disposed in the slideway 52 and defines a neutral position and at least one operating position. The neutral position for spool 50 is shown in Fig. 2. Movement of spool 50 to the left or right of the position shown in Fig. 2 defines one or more operating position. The land areas 58 and 60 on spool 50 move to the left or to the right in unison as a function of the pressure differential between end chambers 66 and 68 to define flow paths for the fluid. For example, when the spool land areas 58 and 60 move to the right of the position illustrated in Figure 2, a first fluid flow path is established or defined between inlet port 32, annular space 64 and control line 22 while exhaust port 34 is blocked. Alternatively, if the spool moves to the left of the position illustrated in Figure 2, a fluid flow path is established between control line 22, annular recess area 64, and exhaust or return port 34 while inlet port 32 is blocked. The resilient feedback means of the present invention impart a follow-up movement to return the spool 50 to its neutral position.

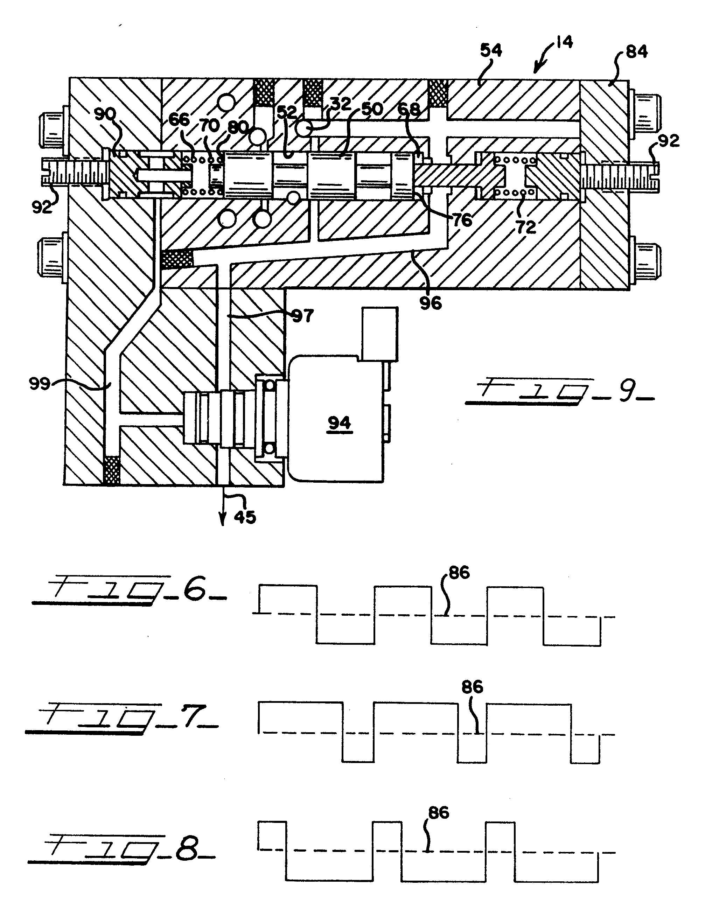

In contrast to the closed center arrangement of stage 48, the pilot stage 42, schematically represented at Figure 3, is an open center arrangement, at common point 46. Stage 42 functions as a three way arrangement. Instead of a spool, the pilot stage 42 of the valve assembly uses a combination of the two orifices 40 and 44, the flow through one of which is controlled by a pulse width modulated signal to effect the desired fluid flow control. The relationship of the first orifice 40 and the second orifice 44 may be stated in an equation: $A_1 = A_2 2$ where $A_1$ is the size of orifice opening 40 and $A_2$ is the size of the opening of orifice 44. In this embodiment, the flow rate through orifice 40 is substantially fixed or constant. Therefore, the common point 46 "sees" or is subject to a pressure substantially equal to that in supply lines 18 and 38, neglecting friction drops and other minor losses. Understandably, the flow rate through orifice 44 changes the flow through the orifice 40. As such an average flow rate will be applied over line 78 to end chamber 66. By such construction, end chamber 66 is a variable pressure chamber, while end chamber 68 may be considered a substantially constant pressure chamber.

As indicated in Figures 6, 7, and 8, the duty cycle of PWM signal is independently adjustable as desired by the operator of the vehicle. The valve assembly responds to the duty cycle of the alternating signal provided by that PWM circuit 28 and applied to the solenoid winding 24. As seen in Figures 6, 7 and 8, the PWM signal has a constant time period (or frequency) and a variable duty cycle. That portion of the wave form above the broken line 86 represents energization time of the solenoid winding 24. The flow rate through orifice 44 will be increased or decreased as a function of the duty cycle of the PWM signal. In one preferred form, reducing the duty cycle effectively increases the flow rate through orifice 44. As the flow through orifice 44 is modulated so is the flow rate change at the commonpoint 46, with a consequent change in the pressure in end chamber 66. In operation, the duty cycle of the alternating PWM signal on line 30 controls the average flow to end chamber 66. This means that a flow control valve assembly can be implemented with a simple and economical solenoid valve controlled by a pulse width modulated signal in one stage of a two stage control valve rather than the much more expensive servo-type valves which are generally used for such a purpose.

Details of the valve assembly 14 shown schematically in Figures 2 and 3 are set out in Figures 4 and 5. Two valve body covers 84 and 86 are secured at opposite ends of the valve body 54. A solenoid valve 88 is shown with an electrical conduit 30 for carrying the output signal from the pulse width modulation circuit 28 for application to the solenoid winding 24 of the solenoid valve 88. As mentioned above, the PWM signal applied to winding 24 determines or regulates the effective fluid flow to chamber 66 and the pressure differential between end chambers 66 and 68 to position the closure member or spool 50 and thereby determine the flow rate through the control line 22. The closure member or spool 50 is slidably accomodated within the cylindrical recess or slideway 52 provided in the body portion 54 of the valve assembly such that end chambers 66 and 68 are defined at opposite ends thereof. Coaxially arranged in each end chamber is an adjustor 90 the axial or linear position of which can be determined by a screw 92 extending through a central internally threaded aperature provided in each end cover. As such, the adjustor 90 defines the wall of the end chamber engaged by one end of each compression spring. By such construction, the effect of the mechanical feedback means on the spool closure member may be modulated through linear adjustment of screw 92.

Fluid under pressure is admitted to the control valve assembly through port 32 from whence it flows into end chamber 68. This establishes a certain pressure at this end of the spool. The fluid also flows through orifice 40. After passing through orifice 40, the majority of fluid flows to orifice 44. The fluid passing through orifice 44 is returned through line 45 to the sump 20. After passing through orifice 40, some of the fluid passes to the common point 46 and from thence into end chamber 66. The fluid flowing into end chamber 66 establishes a pressure therein which acts against the end of spool 50 in a direction opposed to that pressure applied at the opposite end of the spool. The differential pressure established between end chambers 66 and 68, as regulated by the PWM signal, controls the disposition of spool 50 and thereby the fluid flow to the actuator.

An alternative valve spool embodiment is illustrated in Figures 9 and 10. The alternative embodiment is similar to that embodiment described above and, therefore, like reference numerals indicate like parts between the illustrations. In this second embodiment, a true three way pilot stage for the valve assembly is provided.

In this alternative embodiment, end chamber 68 remains supplied with a relatively constant flow of fluid such that a relatively constant pressure is established therein. The other end chamber 66 is supplied with a fluid flow which establishes an average, controlled pressure therein. As with the first embodiment, this average, controlled pressure is established as a function of the duty cycle of solenoid valve 94 which is controlled by a PWM signal employed in the pilot stage of the valve assembly.

A schematic representation of the pilot stage of the second embodiment is provided in Figure 10 with details of the entire valve assembly being provided or illustrated in Figure 9. As seen in Fig. 9, fluid under supply pressure may be admitted to the control valve assembly at port 32 from whence the admitted fluid flows into end chamber 68. This establishes a pressure on spool end 76 tending to urge the spool 50 to the left, as seen in Fig. 9. Fluid also flows through passageways 96 and 97 to solenoid valve 94 having an electrical winding. The operation of the solenoid valve 94 is depicted in a hydraulic format in Figure 10. In this alternative embodiment, the solenoid valve 94 controls the fluid flow to end chamber 66 over line 99 and to the reservoir 20 over line 45 as a function of the enerization of the solenoid winding 24. In effect, and with a pilot stage constructed in accordance with the second embodiment, there is a normally open orifice 98 which leads to end chamber 66 and a normally closed orifice 100 which leads to the reservoir or sump 20. As mentioned, the fluid flow through the orifices 98 and 100 will be proportionately increased or decreased as a function of the duty cycle of the PWM signal. As the flow through orifices 98 and 100 is modulated, so is the flow rate to the end chamber 66. In such an embodiment, the spool end areas 80 and 76 which are exposed to pressure are preferably designed with a 2:1 area ratio, respectively.

13. A control system according to claim 12, characterised in that said solenoid valve (88) is a two-way on-off solenoid valve which operates in combination with a first fixed orifice (40) for determining which oppositely directed spool position determining force will predominate over the other.

14. A valve assembly comprising: a valve body (54) having a slideway (52), an inlet port (32) connectable to a fluid source (16), an outlet port (36) spaced from said inlet port and connectable to a hydraulic actuator (12); closed centre spool means (50) with resilient feedback means (70,72) movably disposed in said slideway for controlling fluid flow between said inlet and outlet ports (32,36) as a function of its position in said slideway; a first fluid receiving chamber (68) communicating with said fluid source (16) to be charged with fluid in a manner producing a pressure urging said spool means (50) in a first axial direction; a second fluid receiving chamber (66) communicating with said fluid source (16) to be charged with a fluid in a manner producing a pressure urging said spool means in a second axial direction, wherein a solenoid valve (88) is interposed between said fluid source and said second fluid receiving chamber; and means (28) for producing a cyclical train of pulse width modulated signals for operating said solenoid valve (88) in a manner controlling the pressure in said second fluid receiving chamber (66) and thereby the flow to said hydraulic actuator (12).

15. Control means (10) for modulating flow of a fluid between a fluid source (16) and a hydraulic actuator (12), comprising: a reciprocally supported spring centred control spool (50) positioned between said fluid source (16) and said hydraulic actuator (12) for controlling the flow of a fluid therebetween as a function of its displacement; a control pressure chamber (66,68) provided at each end of said control spool means, each pressure chamber communicating with said fluid source and arranged to be supplied with a fluid so as to create a pressure in said chamber and with the position of said spool means being determined by a pressure differential between said chambers; and open loop fluid controller means (10) operably interposed between said fluid source and one of said pressure chambers (66) for modulating the pressure in said one of said pressure chambers by regulating the flow thereto whereby controlling the position of said control spool (50) and thereby controlling the fluid flow to said actuator (12).

16. A valve assembly (14) operable to control fluid flow between a fluid source (16) and a fluidically responsive actuator (12), said valve assembly comprising: a valve body (54) having a slideway (52), at least one fluid inlet (32) connected to said fluid source and at least one flow outlet (36) connected to said actuator (12); a closed centre spring centred valve slide (50) movably positioned in said slideway to control the outflow of fluid by way of said fluid outlet, said valve slide being arranged in said slideway such that end chambers (66,68) are defined at opposite ends of said valve slide, with each end chamber communicating with said fluid source (16) such that each chamber is supplied with fluid which establishes a pressure in each chamber, the position of said valve slide being determined by a pressure differential between said chambers, means for producing a pulse width modulated signal (28); and means (24) responsive to said pulse width modulated signal for controlling the pressure in one of said end chambers (66) and thereby controlling the position of said valve slide (50).

17. A fluid control system (14) operable to control the flow of fluid from a source (16) of pressurised fluid to a fluid pressure operated device (12), the controller comprising: a housing (54) including an inlet port (32) for connection to the source of fluid (16), a return port (34) for connection to a fluid reservoir (20), and at least one control fluid port (36) for connection to the fluid pressure operated device (12); valve means (50) slidably disposed in said housing and defining a neutral position and at least one operating position; said valve means cooperating with said housing to further define a first flow path communicating said control fluid port with either said inlet or return ports when said valve means is in its operating position; means (70,72) for imparting follow-up movement to return said valve means to said neutral position in response to fluid flow from or to the fluid operated device; and a hydraulic pressure system (48) for influencing the position of said valve means and thereby the flow at said control fluid port, said hydraulic system comprising fluidic means (38,74) for operably applying oppositely directed position determining forces against said valve means (50) and pulse width modulated signal controlled means (28) for determining which oppositely directed position determining force will predominate over the other.

18. A fluid flow control system or valve assembly according to claim 4, 14, 15, 16 or 17, characterised in that said solenoid valve (88) operates in combination with a first normally open orifice (98) coupled to a second normally closed orifice (100) at a common point (99), the flow through the orifices being regulatable by a train of pulse width modulated signals applied to the winding (24), the common point (99) being coupled to said second fluid receiving chamber (66).

19. A control system according to any preceding claim, characterised in that said pulse width modulatable signal (28) is independently adjustable.

With either valve arrangement, regulation of the pressure applied to the closed center spool with a pulse width modulated signal allows an economical and relatively simple valve to be incorporated as one stage in a two stage control valve assembly. In the other stage of the valve, the mechanical feedback means allow the valve to seek its proper balance position. The provision of such resilient feedback means is less costly and is easier to manufacture than that of the more expensive fluid control valves normally used in such an environment.

Thus, there has been provided a VALVE ARRANGEMENT FOR A FLUID FLOW CONTROL SYSTEM which fully satisfies the objects, aims and advantages set forth above. While the invention has been described in connection with specific embodiments thereof, it is evident that many other alternatives, modifications and variations will be apparent to those skilled in the art in light of the foregoing description. Accordingly, it is intended to embrace all such alternatives, modifications, and variations as fall within the spirit and broad scope of the appended claims.

## Claims

1. A control system (10) for changing flow of a fluid to operate a fluidically responsive actuator (12), comprising: a two stage control valve arrangement (14) wherein one stage includes a pressure responsive movable closure member (50) with resilient feed back means (70,72) for regulating fluid flow between a fluid source (16) and said actuator (12) as a function of its linear position which is determined by oppositely directed pressure based position determining forces one of which may predominate over the other, another stage including a solenoid valve with a winding (24) for controlling one of said position determining forces; and means (28) for developing a pulse width modulatable signal which is applied to said solenoid valve winding (24) to effect the position of said closure member (50) and thereby the flow to said actuator.

2. A control system according to claim 1, characterised in that said resilient feed back means comprises mechanical resilient means (70,72).

3. A control system for regulating a fluid output comprising: a valve body (14) including a fluid receiving inlet (32) and an outlet (36); a pressure responsive movable closure member comprising a spring centred spool (50) slidably arranged relative said valve body (54) for controlling fluid communication between said inlet (32) and outlet (34) as a function of spool position; and a hydraulic pressure system (18,38,74) for controlling the position of said spool and thereby the fluid outlet, said hydraulic system comprising fluidic means (38,74) for operably applying oppositely directed spool position determining forces against said spool (50) and pulse width modulatable signal controlled means (28) for determining which oppositely directed spool position determining force will predominate over the other.

4. A control system according to claim 1, 2 or 3, wherein fluid receiving chambers (66,68) are provided at opposite ends of said closure member (50).

5. A control system according to claim 4, characterised in that a compression spring (70,72) is disposed in each chamber (66,68), with ends of each spring bearing against an end wall of said chamber and a closure member end (76,80).

6. A control system according to claim 4 or 5, characterised in that one of said end chambers is a variable pressure chamber (66) and the other is a substantially constant pressure chamber (68).

7. A control system according to claim 4, 5 or 6, characterised in that one closure member end (80) has an effective area which ranges between approximately one-third and two times larger than the opposite closure member end (76).

8. A control system according to claim 1, or any preceding claim appendant thereto, characterised in that said another stage further includes a first orifice (40) coupled to a second orifice (44) at a common point (46), an average flow through the second orifice (44) being regulated by the pulse width modulatable signal (28) applied to said solenoid valve winding (24), and means coupling the common point (46) to one end of said closure member (50) thus applying to the closure member a position determining force having a magnitude which varies as the flow rate at said common point.

9. A control system according to claim 3, or any preceding claim appendant thereto, characterised in that said valve body (54) further includes an elongated slideway (52) in which said spool (50) is slidably accommodated.

10. A control system according to claims 9 and 4, characterised in that each of said fluid receiving chambers (66,68) is in fluidic communication with the fluid received at the inlet (32) to the valve body.

11. A control system according to claim 10, characterised in that one of said fluid receiving chambers (66) communicates with the fluid received at the inlet to the valve body through a first orifice (40) which is coupled to a second orifice at a common point (46), an average flow of the second orifice (44) being regulated by the pulse width modulatable signal (28), and means coupling the common point (46) to said one of said fluid receiving chambers (66).

12. A control system according to any preceding claim, characterised in that said pulse width modulatable signal controlled means (28) includes a solenoid valve (88) with a winding (24) for determining which of two oppositely directed conduit member positioning determining forces will predominate over the other.

0276056

FIG-1-

FIG-2-

FIG-3-

FIG-10-

FIG-4

FIG-5

0276056

_FIG_9_

_FIG_6_

_FIG_7_

_FIG_8_